# EUROPÄISCHE PATENTANMELDUNG

(11) **EP 1 072 919 A1**
(43) Veröffentlichungstag der Anmeldung: **31.01.2001**
(21) Anmeldenummer: 99810666.0
(22) Anmeldetag: 26.07.1999
(51) Int. Cl.: G02B 6/38

(54) **Steckerteil für eine optische Steckverbindung**

(71) Anmelder: Diamond SA, 6616 Losone (CH)
(72) Erfinder: DeMarchi, Silverio, 6612 Ascona (CH)
(74) Vertreter: Wenger, René

(57) **Zusammenfassung**

Das Steckergehäuse (2) besteht aus wenigstens zwei Gehäuseteilen (4, 5), welche durch ein Verbindungselement (6) zusammengehalten werden, das die Aussenseite der Gehäuseteile wenigstens teilweise umgreift. Das Verbindungselement ist vorzugsweise als Schnappbügel ausgebildet, der auf die beiden Gehäuseteile aufschnappbar ist. Gemäss einer besonders vorteilhaften Ausführungsform bei einem Steckerteil mit einer Schutzklappe bildet das Verbindungselement (6) die Führungsbahn für die Schutzklappe oder es ist Bestandteil dieser Führungsbahn. Das Verbindungselement gewährleistet eine sichere Verbindung der beiden Gehäuseteile und es schützt und verstärkt das Steckerteil insgesamt.

## Beschreibung

Die Erfindung betrifft ein Steckerteil für eine optische Steckverbindung gemäss dem Oberbegriff von Anspruch 1.

Es ist seit langem bekannt und gebräuchlich, Steckergehäuse für optische Stecker mehrteilig auszubilden, um die Montage der inneren Steckerteile, insbesondere des Steckerstiftes zu ermöglichen, bzw. um den Stecker mit dem Glasfaserkabel zu verbinden.

Da eine Demontage ebenfalls möglich sein sollte, werden zur Verbindung der Gehäuseteile meistens Schraubverbindungen oder Schnappverbindungen eingesetzt. Ein Beispiel für ein mehrteiliges Steckergehäuse ist in der US-A-5,481,634 beschrieben.

Ein Nachteil von Schraubverbindungen besteht darin, dass die Herstellungskosten in Folge der Gewindeabschnitte relativ hoch sind. Auch der Montageaufwand ist höher als bei Schnappverbindungen und es müssen zudem Massnahmen getroffen werden, dass sich die Schraubverbindung im Laufe der Zeit nicht lösen kann. Bei Schnappverbindungen besteht wiederum die Gefahr, dass sie bei mehrmaligem Gebrauch erlahmen, weil die Steckerteile in den meisten Fällen aus Kunststoffmaterial hergestellt sind. Ausserdem ist das Steckergehäuse im Bereich der Verbindung zwischen den beiden Gehäuseteilen und damit auch im Bereich der Schnappverbindung starken Biegekräften ausgesetzt.

Es ist daher eine Aufgabe der Erfindung, ein Steckerteil der eingangs genannten Art zu schaffen, dessen Gehäuseteile auf einfachste Art miteinander verbunden werden können, wobei auch nach mehrfacher Demontage eine sichere Verbindung hergestellt wird. Das Steckergehäuse soll ausserdem gegen Biegung und Torsion sowie gegen andere mechanische Einwirkungen zusätzlich geschützt werden. Diese Aufgabe wird erfindungsgemäss mit einem Steckerteil gelöst, das die Merkmale im Anspruch 1 aufweist.

Die beiden Gehäuseteile werden dabei durch ein Verbindungselement zusammengehalten, das die Aussenseite der Gehäuseteile wenigstens teilweise umgreift. Das Verbindungselement kann einerseits so ausgebildet werden, dass eine sichere Verbindung auch bei häufigem Gebrauch gewährleistet ist. Schwierig zu entformende Hinterschneidungen für eine Schnappverbindung an den Gehäuseteilen selbst sind nicht erforderlich. Ausserdem stabilisiert und schützt das Verbindungselement das Steckergehäuse zusätzlich.

Besonders vorteilhaft ist das Verbindungselement als Schnappbügel ausgebildet, der auf die beiden Gehäuseteile aufschnappbar ist. Der Schnappbügel kann dabei etwa U-förmig ausgebildet sein, wobei in den seitlichen U-Schenkeln wenigstens je eine Aussparung angeordnet ist, welche mit wenigstens je einer Materialerhebung auf der Aussenseite der Gehäuseteile zusammenwirkt. Erhebungen an den Gehäuseteilen sind ersichtlicherweise wesentlich einfacher zu entformen als Hinterschneidungen. Der U-förmige Schnappbügel schützt das Steckergehäuse auf wenigstens drei Aussenseiten.

Der Steckerstift kann gegen die Kraft einer Feder axial verschiebbar im Steckergehäuse gehalten sein, wobei die Feder direkt oder indirekt an einem kabelseitigen Gehäuseteil und der Steckerstift direkt oder indirekt an einem steckerstirnseitigen Gehäuseteil abgestützt ist. Bei der Montage des Steckergehäuses wird die Feder dabei leicht vorgespannt.

Besonders einfach lässt sich das Steckergehäuse montieren, wenn der Schnappbügel auf das steckerstirnseitige Gehäuseteil in einer Richtung quer zur Längsmittelachse des Steckerteils und auf das kabelseitige Steckerteil parallel zur Längsmittelachse des Steckerteils aufschnappbar ist. Auf diese Weise können die steckerstirnseitigen Gehäuseteile vormontiert werden, wobei nach dem Einbau des vorzugsweise gefederten Steckerstifts nur noch eine axiale Schnappbewegung erforderlich ist.

Eine weitere Stabilisierung des Steckergehäuses kann dadurch erreicht werden, dass die beiden Gehäuseteile derart aneinander anliegen bzw. ineinander greifen, dass sie gegen Verdrehung um die Längsmittelachse des Steckerteils gesichert sind. Über das Kabel können teilweise hohe Torsionskräfte auf das Steckergehäuse übertragen werden, welche zur Vermeidung einer Verdrehung des Steckerstifts aufgenommen werden müssen. Eine vorteilhafte Verdrehsicherung besteht dabei darin, dass eines der Gehäuseteile eine sich vorzugsweise zum Ende hin verjüngende Sicherungsnase aufweist, welche in eine korrespondierende Ausnehmung am benachbarten Gehäuseteil eingreift. Durch die sich verjüngende Ausbildung von Nase und Ausnehmung ist ein gegenseitiges Verkeilen der beiden Teile möglich.

Gemäss einer weiteren Ausgestaltung der Erfindung kann das Verbindungselement neben der Verbindungs- und Schutzfunktion auch noch eine zusätzliche Funktion übernehmen. Zahlreiche Steckerteile sind nämlich heute mit einer Schutzklappe zum Schutz der Stirnseite des Steckerstifts versehen. Die Schutzklappe ist dabei an einer Führungsbahn derart schwenkbar und verschiebbar gelagert, dass sie beim Einstecken des Steckerteils in ein Buchsenteil aus einer Schliessposition an der Stirnseite des Steckergehäuses in eine relativ zur Stirnseite zurückversetzte Öffnungsposition bewegbar ist. Ein Beispiel für ein derartiges Steckerteil ist in der EP-A-823 649 beschrieben.

Bei ausreichender Grösse des Steckergehäuses bietet die Integration der Führungsbahn keinerlei Probleme. Im Zusammenhang mit der zunehmenden Miniaturisierung der Steckerteile ist es jedoch an einem Kunststoffgehäuse relativ schwierig, noch eine Führungsbahn anzuordnen, weil bestimmte minimale Wandstärken aus giesstechnischen Gründen nicht unterschritten werden dürfen. Erfindungsgemäss ist es daher besonders vorteilhaft, wenn das Verbindungselement die Führungsbahn für die Schutzklappe bildet oder Bestandteil dieser Führungsbahn ist. Das Verbindungselement müsste dabei nicht einmal zwingend eine Verbindungsfunktion übernehmen. Auch an einem einteiligen Steckergehäuse könnte ein bügelartiges Schutzelement aufgeschnappt werden, das ganz oder teilweise als Führungsbahn dient.

Die Schutzklappe kann dabei ein Paar Gelenknocken aufweisen, die an einer Gelenkgabel angeordnet sind und deren freie Enden voneinander wegweisen. Die Gabel kann dabei eine Führungsleiste am Steckergehäuse übergreifen, womit sie zusätzlich stabilisiert wird.

Besonders vorteilhaft und platzsparend kann die Führungsbahn durch einen Oberflächenabschnitt des Gehäuseteils und einen Oberflächenabschnitt des Verbindungselements gebildet werden. Das Verbindungselement kann dabei als etwa U-förmiger Schnappbügel ausgebildet sein, dessen U-Schenkel an den freien Enden abgewinkelt sind. Diese Abwinkelungen bilden dabei den einen Oberflächenabschnitt der Führungsbahn. Alternativ zum abgewinkelten U-Schenkel könnte die Steuerbahn natürlich auch vollständig in das Verbindungselement integriert sein, beispielsweise in der Form eines Längsschlitzes.

Die Schutzklappe kann eine etwa in der Ebene der Steckerstirnseite verlaufende Steuerzunge aufweisen, welche zum Schwenken in die Öffnungsposition mit einem Buchsenteil zusammenwirkt. Bei der Schutzklappe gemäss EP-A-823 649 wird die Öffnungsbewegung über Steuernokken ausgeführt. Je nach Ausbildung des Buchsenteils ist dies aber aus Platzgründen nicht in jedem Fall möglich. Die Steuerzunge wirkt auf einfache Weise als Hebelarm, der durch die Relativbewegung zwischen Buchsenteil und Steckerteil betätigt wird.

Damit die Schutzklappe im ungesteckten Zustand stets geschlossen bleibt, ist sie vorteilhaft mittels einer Schraubendruckfeder in die Schliessposition vorgespannt. Diese ist am steckerstirnseitigen Gehäuseteil abgestützt. Zum Schutz der Schraubendruckfeder und für ein besseres Zusammenwirken mit der Schutzklappe ist ein Stössel vorgesehen, der die Schraubendruckfeder wenigstens teilweise umgibt und der am steckerstirnseitigen Gehäuseteil verschiebbar gelagert ist. Der Stössel liegt dabei an einem Hebelarm an, der die Stösselstirnseite in jeder Position der Bewegung berührt.

Das Verbindungselement ist besonders vorteilhaft aus Stahl, insbesondere als Biegeteil aus Stahlblech gefertigt. Derartige Biegeteile lassen sich sehr kostengünstig herstellen. Alternativ könnte das Verbindungselement natürlich auch aus einem geeigneten Kunststoffmaterial gefertigt werden.

Ausführungsbeispiele der Erfindung sind in den Zeichnungen dargestellt und werden nachstehend genauer beschrieben. Es zeigen:
- Figur 1: eine Seitenansicht eines Steckerteils mit den Merkmalen der Erfindung,
- Figur 2: eine Draufsicht auf das Steckerteil gemäss Figur 1,
- Figur 3: eine Ansicht der Stirnseite des Steckerteils gemäss Figur 1,
- Figur 4: ein Längsschnitt durch das Steckerteil gemäss Figur 1 in etwas vergrösserter Darstellung,
- Figur 5: einen Querschnitt durch die Ebene I-I am Steckerteil gemäss Figur 4,
- Figur 6: eine Detailvergrösserung aus dem Querschnitt gemäss Figur 5,
- Figur 7: eine perspektivische Darstellung des Steckerteils gemäss Figur 1,
- Figur 8: das Steckerteil gemäss Figur 7 mit geöffneter Schutzklappe,
- Figur 9: eine Explosionszeichnung des Steckerteils gemäss Figur 1,
- Figur 10: ein Steckerteil beim Einschieben in ein Buchsenteil,
- Figur 11: das Steckerteil gemäss Figur 10 beim Erreichen der endgültigen Einsteckposition
- Figur 12: eine perspektivische Darstellung eines alternativen Ausführungsbeispiels und
- Figur 13: das Steckerteil gemäss Figur 12 mit geöffneter Schutzklappe.

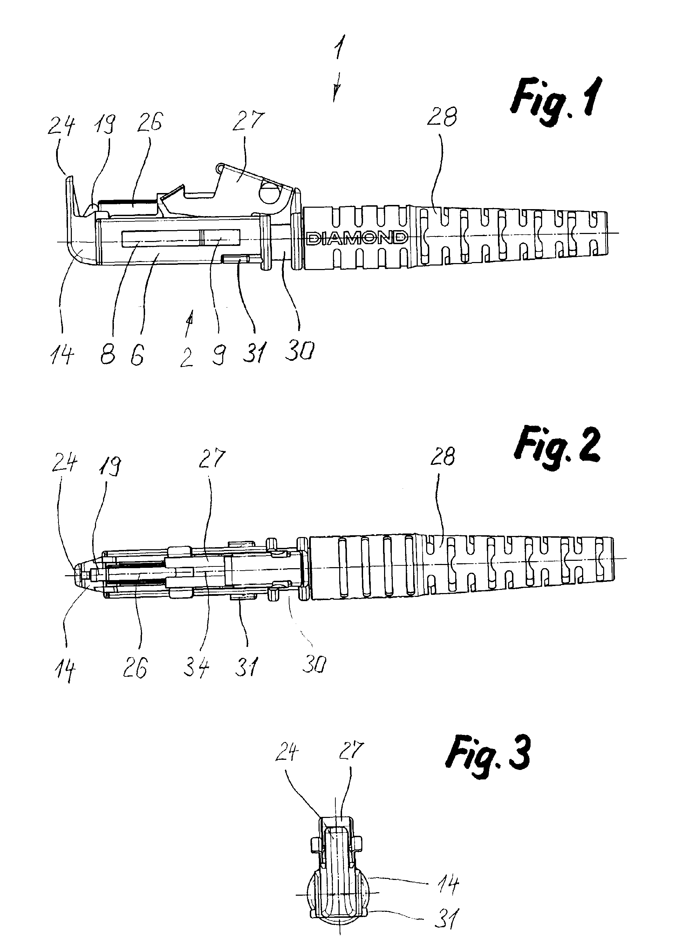

Wie in den Figuren 1 bis 4 dargestellt, besteht ein Steckerteil 1 im wesentlichen aus einem Stekkergehäuse 2, das in ein steckerstirnseitiges Gehäuseteil 4 und ein kabelseitiges Gehäuseteil 5 aufgeteilt ist. Das Steckergehäuse enthält dabei einen Steckerstift 3, der in Richtung der Längsmittelachse 34 federnd gelagert ist. Selbstverständlich wäre es auch denkbar, dass im gleichen Steckergehäuse mehrere Steckerstifte gehalten sind.

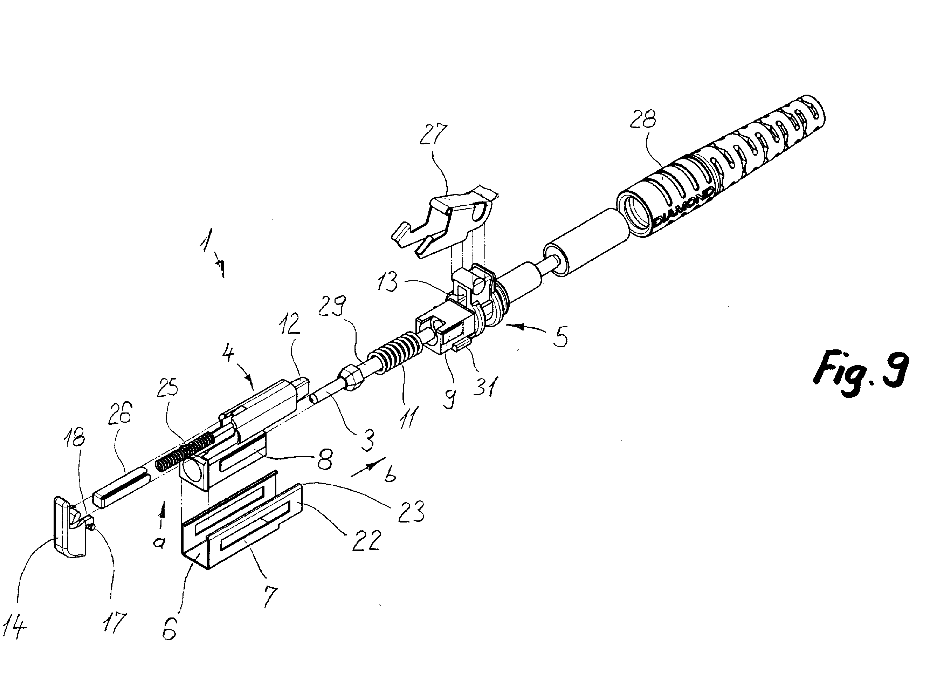

Der Steckerstift 3 ist in einer Stifthalterung 29 fixiert, welche auf der gegenüberliegenden Seite das optische Kabel aufnimmt. Dieses ist aus Gründen der besseren Übersichtlichkeit jedoch hier nicht dargestellt. Ein flexibler Kabelknickschutz 28 begrenzt auf bekannte Weise den zulässigen Biegeradius am Kabel. Auf der Stifthalterung 29 ist eine Schraubendruckfeder 11 gelagert, welche einerseits am kabelseitigen Gehäuseteil 5 und anderseits am mehreckig ausgebildeten Kopfende 35 der Stifthalterung abgestützt ist. Dieses Kopfende wird im ungestecktem Zustand gegen eine korrespondierende Öffnung im steckerstirnseitigen Gehäuseteil gepresst und dabei winkelmässig positioniert. Im eingesteckten Zustand wird das Kopfende dagegen vom steckerstirnseitigen Gehäuseteil 4 entkoppelt und gegen die Kraft der Feder 11 zurückgepresst.
Die beiden Gehäuseteile 4 und 5 werden mit Hilfe eines Schnappbügels 6 zusammengehalten, der gemäss den Figuren 5 und 9 etwa U-förmig ausgebildet ist. In beiden U-Schenkeln ist dabei je eine rechteckige Aussparung 7 angeordnet. Diese übergreift je eine korrespondierende Erhebung 8 auf den beiden Seitenwänden des steckerstirnseitigen Gehäuseteils 4 bzw. je eine korrespondierende Erhebung 9 auf den beiden Seitenwänden des kabelseitigen Gehäuseteils 5. Auf- das Gehäuseteil 4 kann der Schnappbügel 6 in Pfeilrichtung a von unten her aufgeschnappt werden. Dagegen erfolgt die Aufschnappbewegung auf das kabelseitige Gehäuseteil 5 in Pfeilrichtung b parallel zur Längsmittelachse 34.

Die beiden Gehäuseteile 4 und 5 sind derart ausgebildet, dass die aneinander liegenden Berührungsflächen gleichzeitig eine Verdrehsicherung bewirken. So ist das Gehäuseteil 4 mit einer sich keilartig verjüngenden Sicherungsnase 12 versehen, welche in eine korrespondierende Ausnehmung 13 am Gehäuseteil 5 eingreift und sich dort leicht verkeilt. Diese leichte Verkeilung bewirkt eine völlig spielfreie Verbindung zwischen den Gehäuseteilen.

Am Gehäuseteil 5 sind zudem seitliche Stabilisierungsnocken 31 angeordnet, an denen sich der Schnappbügel 6 zusätzlich abstützt.

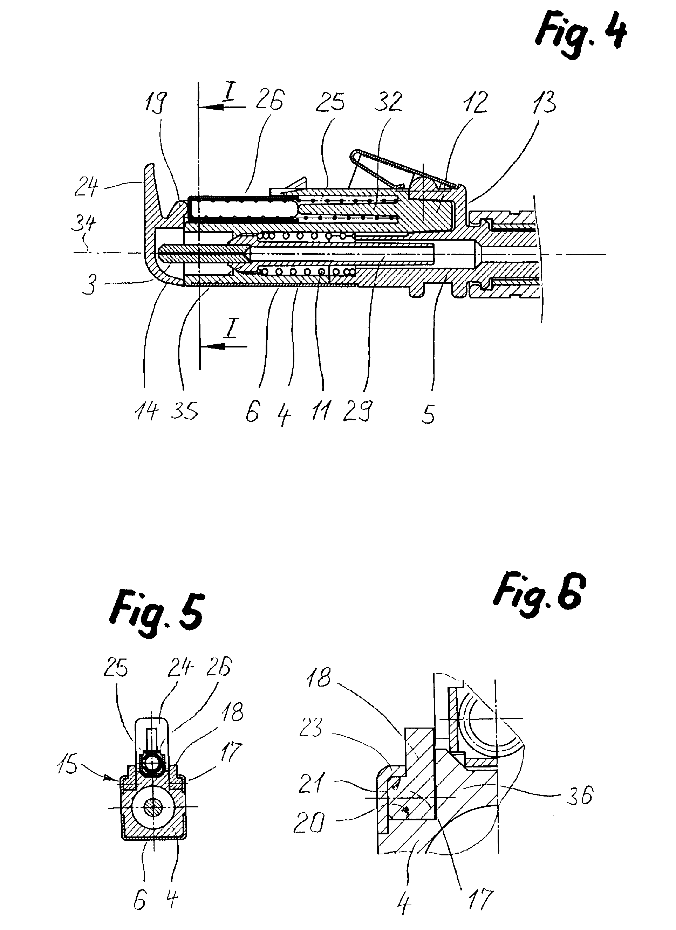

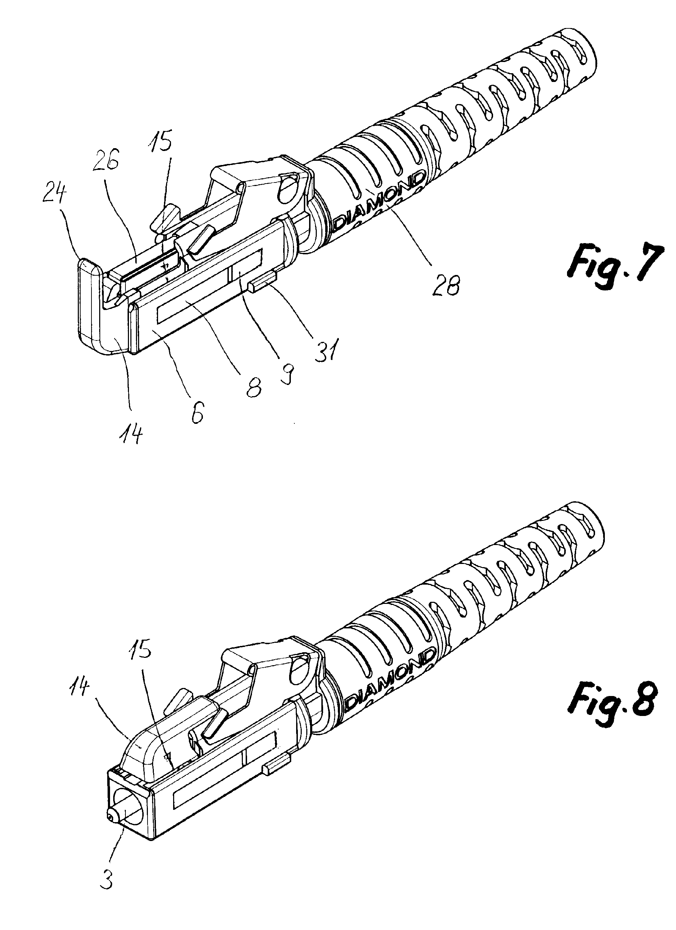

Die Steckerstirnseite ist im ungesteckten Zustand stets mit einer Schutzklappe 14 verschlossen. Diese verfügt über eine Gelenkgabel 18 mit seitlich daran angeordneten, voneinander wegweisenden Gelenknocken 17. Diese Gelenknocken sind in einer Führungsbahn 15 schwenkbar und verschiebbar gelagert. Die Schutzklappe 14 kann dabei in dem etwa um 90° aufgeschwenkten Zustand auf der Oberseite des Steckergehäuses zurückgeschoben werden, so dass sie im Buchsenteil weniger Platz beansprucht und den Steckvorgang nicht behindert. Die vollständige Öffnungsposition ist in Figur 8 dargestellt, die jedoch unter normalen Umständen nur im korrespondierenden Buchsenteil erreicht wird.

Die Führungsbahn 15 wird einerseits durch je einen Oberflächenabschnitt 20 am Gehäuseteil 4 und durch die Unterseite 21 einer Abwinklung 23 des Schnappbügels 6 gebildet. Jeder U-Schenkel 22 ist dabei soweit abgewinkelt, dass er die Gelenknocken 17 ausreichend übergreift. Durch eine Längsrippe 36, ist die Gelenkgabel 18 zusätzlich stabilisiert.

Die Schutzklappe 14 wird mittels einer Schraubendruckfeder 25 in die Schliessposition vorgespannt. Diese Feder sitzt auf einem Federdorn 32 am Gehäuseteil 4. Die Beaufschlagung der Schutzklappe erfolgt indirekt über einen Stössel 26, der die Schraubendruckfeder teilweise umgibt. Dieser Stössel ist ebenfalls als Biegeteil aus Metall ausgebildet, wobei vier parallel abgewinkelte Seitenwände ein quaderförmiges Federgehäuse bilden. Die Stösselstirnseite berührt in jeder Position der Schutzklappe einen Hebelarm 19, der über die Ebene der Gelenknocken 17 hinausragt.

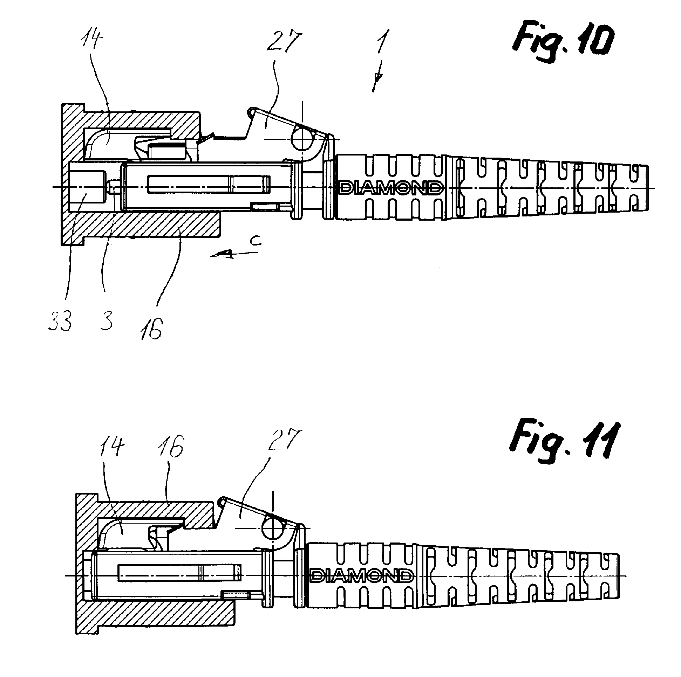

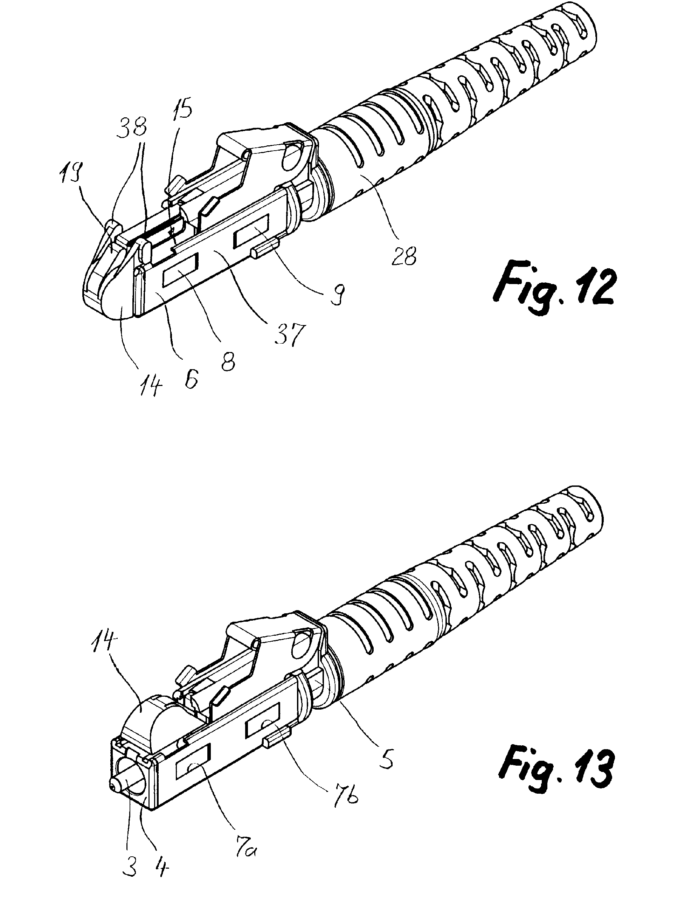

Die Steuerung der Schutzklappe 14 beim Einstecken in ein Buchsenteil 16 (Figuren 10 und 11) erfolgt an einer Steuerzunge 24, welche am äusseren Rand der Buchsenöffnung zurückgeklappt wird. Das Buchsenteil 16 enthält die eigentliche Buchse 33, welche den Steckerstift 3 passgenau aufnimmt. In der einmal aufgeschwenkten Position bleibt die Schutzklappe 14 relativ zum Buchsenteil 16 stehen, während das Steckerteil in Pfeilrichtung c weiter eingeschoben wird. Die Verriegelung des Steckerteils 1 im Buchsenteil 16 erfolgt mit Hilfe eines Verriegelungselements 27 auf hier nicht näher beschriebene Art und Weise.

Das in den Figur 12 und 13 dargestelle alternative Ausführungsbeispiel entspricht bezüglich Aufbau und Funkion im wesentlichen dem oben beschriebenen Steckerteil. Die Materialerhebungen 8 und 9 stossen jedoch nicht aneinander an, sondern sind im Abstand angeordnet. Dem entsprechend sind auch zwei separate Aussparungen 7a, 7b im Schnappbügel 6 vorgesehen. Der dazwischen verbleibende Mittelsteg 37 verdeckt die Stossverbindung zwischen dem steckerstirnseitigen Gehäuseteil 4 und dem kabelseitigen Gehäuseteil 5.

Etwas modifiziert ist auch die Schutzklappe 14. An die Stelle einer zentralen Steuerzunge treten zwei seitlich vom Hebelarm 19 angeordnete Steuernocken 38. Diese wirken auf ähnliche Weise mit der Eintrittsöffnung am Buchsenteil zusammen, um von der Schliessposition in die Öffnungsposition bewegt zu werden.

Selbstverständlich braucht das Steckerteil nicht die in den Ausführungsbeispielen dargestellte Konfiguration zu haben. Anstelle einer quaderförmigen Aussenkontur wäre auch eine zylindrische Aussenkontur denkbar. Mittels einer hier nicht dargestellten Verbindungsklammer, könnten an einem Halsabschnitt 30 zwei Einzelstecker zu einem Duplexstecker kombiniert werden. Auch die Konfiguration und Funktion der Schutzklappe 14 könnte modifiziert werden, ohne dass dabei der Gegenstand der Erfindung verlassen wird.

## Patentansprüche

1. Steckerteil (1) für eine optische Steckverbindung mit einem Steckergehäuse (2), in dem wenigstens ein Steckerstift (3) gehalten ist, wobei das Steckergehäuse aus wenigstens zwei separaten Gehäuseteilen (4, 5) besteht, dadurch gekennzeichnet, dass die beiden Gehäuseteile durch ein Verbindungselement (6) zusammengehalten werden, das die Aussenseite der Gehäuseteile wenigstens teilweise umgreift.

2. Steckerteil nach Anspruch 1, dadurch gekennzeichnet, dass das Verbindungselement (6) als Schnappbügel ausgebildet ist, der auf die beiden Gehäuseteile (4, 5) aufschnappbar ist.

3. Steckerteil nach Anspruch 2, dadurch gekennzeichnet, dass der Schnappbügel etwa U-förmig ausgebildet ist, und dass in den beiden seitlichen U-Schenkeln (22) wenigstens je eine Aussparung (7) angeordnet ist, welche mit wenigstens je einer Materialerhebung (8, 9) auf der Aussenseite der Gehäuseteile zusammenwirkt.

4. Steckerteil nach einem der Ansprüche 1 bis 3, dadurch gekennzeichnet, dass der Steckerstift (3) gegen die Kraft einer Feder (11) axial verschiebbar im Steckergehäuse (2) gehalten ist, wobei die Feder direkt oder indirekt an einem kabelseitigen Gehäuseteil (5) und der Steckerstift (3) direkt oder indirekt an einem steckerstirnseitigen Gehäuseteil (4) abgestützt ist.

5. Steckerteil nach einem der Ansprüche 2 oder 3 in Kombination mit Anspruch 4, dadurch gekennzeichnet, dass der Schnappbügel (6) auf das steckerstirnseitige Gehäuseteil (4) in einer Richtung quer zur Längsmittelachse (34) des Steckerteils und auf das kabelseitige Steckerteil (5) parallel zur Längsmittelachse (34) des Steckerteils aufschnappbar ist.

6. Steckerteil nach einem der Ansprüche 1 bis 5, dadurch gekennzeichnet, dass die beiden Gehäuseteile (4, 5) derart aneinander anliegen, bzw. ineinander greifen, dass sie gegen Verdrehung um die Längsmittelachse (34) des Steckerteils gesichert sind.

7. Steckerteil nach Anspruch 6, dadurch gekennzeichnet, dass eines der Gehäuseteile (4) eine sich vorzugsweise zum Ende hin verjüngende Sicherungsnase (12) ausweist, welche in eine korrespondierende Ausnehmung (13) am benachbarten Gehäuseteil (5) eingreift.

8. Steckerteil, insbesondere nach einem der Ansprüche 1 bis 7, mit einer Schutzklappe (14) zum Schutz der Stirnseite des Steckerstifts (3), welche an einer Führungsbahn (15) derart schwenkbar und verschiebbar gelagert ist, dass sie beim Einstecken des Steckerteils (1) in ein Buchsenteil (16) aus einer Schliessposition an der Stirnseite des Steckergehäuses in eine relativ zur Stirnseite zurückversetzte Öffnungsposition bewegbar ist, dadurch gekennzeichnet, dass das Verbindungselement (6) die Führungsbahn (15) für die Schutzklappe (14) bildet oder Bestandteil dieser Führungsbahn ist.

9. Steckerteil nach Anspruch 8, dadurch gekennzeichnet, dass die Schutzklappe (14) ein Paar Gelenknocken (17) aufweist, die an einer Gelenkgabel (18) angeordnet sind und deren freie Enden voneinander wegweisen.

10. Steckerteil nach Anspruch 8 oder 9, dadurch gekennzeichnet, dass die Führungsbahn (15) durch einen Oberflächenabschnitt (20) des steckerstirnseitigen Gehäuseteils (4) und durch einen Oberflächenabschnitt (21) des Verbindungselements (6) gebildet wird.

11. Steckerteil nach Anspruch 10, dadurch gekennzeichnet, dass das Verbindungselement (6) als etwa U-förmiger Schnappbügel ausgebildet ist, dessen U-Schenkel (22) an den freien Enden abgewinkelt sind.

12. Steckerteil nach einem der Ansprüche 8 bis 11, dadurch gekennzeichnet, dass die Schutzklappe (14) eine etwa in der Ebene der Steckerstirnseite verlaufende Steuerzunge (24) aufweist, welche zum Schwenken in die Öffnungsposition mit einem Buchsenteil (16) zusammenwirkt.

13. Steckerteil nach einem der Ansprüche 8 bis 12, dadurch gekennzeichnet, dass die Schutzklappe (14) mittels einer Schraubendruckfeder (25) in die Schliessposition vorgespannt ist, welche am steckerstirnseitigen Gehäuseteil (4) abgestützt ist.

14. Steckerteil nach Anspruch 13, dadurch gekennzeichnet, dass die Schraubendruckfeder (25) die Schutzklappe (14) über einen Stössel (26) beaufschlagt, der die Schraubendruckfeder wenigstens teilweise umgibt und der am steckerstirnseitigen Gehäuseteil (4) verschiebbar gelagert ist.

15. Steckerteil nach einem der Ansprüche 1 bis 14, dadurch gekennzeichnet, dass das Verbindungselement (6) aus Stahl, insbesondere als Biegeteil aus Stahlblech gefertigt ist.
